# FASCICULE DE BREVET EUROPEEN

(11) **EP 1 660 341 B1**
(45) Date de publication et mention de la délivrance du brevet: **15.10.2008**
(21) Numéro de dépôt: 04786338.6
(22) Date de dépôt: 20.08.2004
(51) Int. Cl.: B60J 7/185

(54) **TOIT ESCAMOTABLE A ELEMENTS VERROUILLABLES ET VEHICULE AINSI EQUIPE**
VERRIEGELUNGSELEMENTE UMFASSENDES CABRIODACH UND DAMIT AUSGESTATTETES FAHRZEUG
CONVERTIBLE ROOF COMPRISING LOCKING ELEMENTS, AND VEHICLE EQUIPPED WITH SAME

(30) Priorité: 05.09.2003 FR 0310536
(43) Date de publication de la demande: 31.05.2006
(73) Titulaire: Société Européenne de Brevets Automobiles, 75011 Paris 11 (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2004/002173
(87) Numéro de publication internationale: WO 2005/028229

(56) Documents cités:
- EP-A- 0 678 411
- WO-A-02/064391

## Description

L'invention concerne un toit mobile, déplaçable, de véhicule comprenant plusieurs éléments de toit a priori rigides, déplaçables entre une première position dans laquelle ils recouvrent l'habitacle du véhicule et une deuxième position dans laquelle ils découvrent cet habitacle. Un véhicule découvrable à toit repliable vers l'arrière du véhicule est donc également concerné

Couramment , dans ladite deuxième position, le toit est rangé dans le coffre arrière du véhicule.

Un tel toit permet en particulier de transformer un véhicule du type berline ou coupé en un véhicule du type cabriolet.

Plus précisément, il s'agit ici d'un toit comprenant en particulier un élément de toit avant et un élément de toit arrière, déplaçables entre leurs dites première et deuxième positions, les éléments de toit étant, lorsqu'ils recouvrent l'habitacle, reliés entre eux et à des parties (de préférence) respectivement avant et arrière de la structure du véhicule par des moyens de verrouillage commandés par des tiges rigides s'étendant le long des éléments de toit et entraînées en mouvement par un moyen de commande.

Une telle solution a été décrite dans WO-A-02/064391.

Cependant, lorsque les éléments de toit sont dans leur deuxième position, toit ouvert, leur maintien en position n'est encore pas considéré comme (suffisamment) assuré. On ne peut en particulier pas commander de manière suffisamment appropriée leur verrouillage vis-à-vis des parois du coffre ou plus généralement de la structure environnante du véhicule, pour les maintenir efficacement dans cette position, le temps voulu.

Un but de la présente invention est de pouvoir commander les moyens de verrouillage des éléments de toit alors que l'habitacle est découvert.

Un but corollaire est de permettre le verrouillage des éléments de toit une fois rangés dans leur deuxième position (position cabriolet) en utilisant la même commande de verrouillage avec son moteur que lorsque les éléments de toit sont sortis au-dessus de l'habitacle.

Un autre but corollaire est de proposer une solution mécanique, fiable, simple à mettre en oeuvre et à fabriquer en série pour l'automobile.

Suivant l'invention, certains au moins de ces buts sont atteints en prévoyant que les tiges commandant les moyens de verrouillage soient reliées en permanence entre elles, deux à deux, d'un des éléments de toit à un autre, tant dans la première position que dans la deuxième position de ces éléments de toit, par des moyens flexibles transmettant entre ces tiges le mouvement généré par le moyen de commande et permettant ainsi de verrouiller lesdits éléments de toit à la structure du véhicule, tant dans leur première que dans leur deuxième positions.

Par souci de fiabilité et d'efficacité, on conseille que le(chaque) moyen flexible comprenne un câble adapté pour transmettre un mouvement de rotation sous la commande de l'une des tiges à laquelle il est relié, cette tige étant elle-même commandée en rotation par le moyen de commande.

Dans le but recherché d'une solution mécanique, fiable et simple à mettre en oeuvre et à fabriquer en série pour l'automobile, en liaison avec un rangement côte à côte des éléments de toit (ces éléments étant alors de préférence disposés sensiblement horizontalement, superposés les uns au-dessus des autres), une autre caractéristique de l'invention prévoit qu'avantageusement, tant pour verrouiller de manière libérable les éléments de toit ensemble, alors qu'ils sont au-dessus de l'habitacle du véhicule, que donc pour verrouiller au moins certains d'entre eux aux dites parties avant et arrière de la structure du véhicule (telles que les parois intérieures d'un coffre) en position « cabriolet », les tiges rigides comprennent au moins deux tiges pour chaque élément de toit à verrouiller, ces tiges étant filetées et commandées ensemble par des moyens intermédiaires de transmission entraînés en rotation par ledit (l'un desdits) câble(s), lesdites tiges s'étendant à partir de ce moyen intermédiaire de transmission suivant deux sens opposés jusqu'au-delà des extrémités respectivement avant et arrière de l'élément de toit concerné, de préférence suivant une direction sensiblement parallèle à la direction longitudinale du véhicule, chacune de ces tiges se terminant par un écrou vissé, cet écrou étant relié à un embout de verrouillage commandé donc en translation suivant ladite direction longitudinale du véhicule pour engager, ou se dégager d'une desdites parties avant ou arrière de la structure.

Tirant parti de la solution apportée au verrouillage vis-à-vis de la structure du véhicule, l'invention y a donc rattachée la question du verrouillage ensemble des éléments de toit alors qu'ils sont disposés au-dessus de l'habitacle.

C'est pour cela qu'il est proposé, pour verrouiller ensemble lesdits éléments de toit, alors qu'ils recouvrent l'habitacle, dans la continuité les uns des autres, que l'écrou lié à l'une des tiges d'un des éléments de toit définisse une patte de verrouillage mise en mouvement par la tige et adaptée pour crocheter un moyen complémentaire de verrouillage fixé à un autre des éléments de toit, la patte de verrouillage étant mobile sous la commande de ladite tige elle-même entraînée par le câble concerné, pour engager le moyen complémentaire, ou s'en dégager, alors que les éléments de toit sont disposés dans la continuité les uns des autres, au-dessus de l'habitacle.

En alternative ou à titre complémentaire, on propose même que, toit fermé, pour verrouiller l'élément de toit avant à une zone de la structure immédiatement proche du pare-brise du véhicule, alors que les éléments de toit sont sensiblement alignés dans la continuité les uns des autres, l'écrou lié à l'une desdites tiges filetées lié à l'élément de toit avant porte un moyen d'ancrage monté mobile sur l'écrou, sous la commande de ladite tige fileté, de manière à coopérer de manière libérable avec un moyen complémentaire d'ancrage fixé à ladite zone de la structure immédiatement proche du pare-brise du véhicule.

En termes de solutions détaillées particulièrement appropriées au contexte de l'invention, on notera encore :
- qu'avantageusement, pour verrouiller deux desdits éléments de toit entre eux dans la première position, la tige (ou l'une au moins des tiges) liée au moyen de commande fixé à l'un de ces éléments de toit sera filetée et reliée à une patte de verrouillage appartenant aux dits moyens de verrouillage des éléments de toit entre eux, cette patte définissant un écrou mis en mouvement par cette tige et étant adaptée pour coopérer avec un moyen complémentaire de verrouillage fixé à l'autre élément de toit, la patte de verrouillage étant mobile en translation sous la commande du moyen de commande pour engager le moyen complémentaire, ou s'en dégager, alors que lesdits éléments de toit sont disposés dans la continuité l'un de l'autre (les uns des autres), la rotation de la tige filetée entraînant celle du câble flexible correspondant qui relie cette tige à (au moins) une autre tige portée par l'autre élément de toit à verrouiller ;
- que les éléments de toit pourront comprendre un élément de toit intermédiaire, entre les éléments de toit avant et arrière, l'élément de toit avant étant déplaçable au-dessus de l'habitacle pour occuper une position fermée dans laquelle il s'étend sensiblement dans la continuité de l'élément de toit arrière, entre lui et une zone de ladite partie avant de la structure immédiatement proche du pare-brise du véhicule, les éléments de toit étant en outre déplaçables, ensemble, pour découvrir l'habitacle et occuper alors une position côte à côte,
- que, pour verrouiller dans ce cas deux desdits éléments de toit entre eux dans la première position, l'une au moins desdites tiges portée par l'un de ces éléments sera avantageusement filetée et reliée:
   * d'un côté à l'un des câbles flexibles, par l'intermédiaire de pignons engrenant ensemble et dont l'un est entraîné en rotation par ledit câble,
   * et d'un autre côté à une patte de verrouillage appartenant aux dits moyens de verrouillage des éléments de toit entre eux, cette patte définissant un écrou mis en mouvement par la tige et étant adaptée pour coopérer avec un moyen complémentaire de verrouillage fixé à l'autre élément de toit, la patte de verrouillage étant mobile en translation pour engager le moyen complémentaire, ou s'en dégager, alors que lesdits éléments de toit concernés sont disposés dans la continuité l'un de l'autre ;
- que, pour verrouiller en position rangée un élément de toit intermédiaire à une zone de la structure du véhicule, dans le coffre, une tige complémentaire fera avantageusement saillie de la patte de verrouillage liée à l'élément de toit intermédiaire, en direction de ladite zone de la structure, cette tige complémentaire étant pourvue, à une extrémité, d'un doigt qui se déplace avec ledit écrou, ce doigt engageant, ou se dégageant d'un logement fixé à ladite zone de structure, en fonction du sens de déplacement de l'écrou;
- que, pour verrouiller l'élément de toit avant à une zone de la structure immédiatement proche du pare-brise du véhicule, alors que lesdits éléments de toit sont dans leur première position, avec l'élément de toit avant disposé sensiblement dans la continuité de l'élément de toit arrière, la tige (ou l'une au moins des tiges), de préférence filetée, portée par l'élément de toit avant est reliée :
   * d'un côté à l'un des câbles flexibles, par l'intermédiaire de pignons engrenant ensemble et dont l'un est entraîné en rotation par ledit câble,
   * et d'un autre côté à un écrou de liaison entraîné en translation par la tige et se déplaçant ainsi dans un corps solidaire de l'élément de toit avant, un crochet de verrouillage appartenant aux dits moyens de verrouillage étant monté pivotant sur le corps, son pivotement étant commandé par le déplacement en translation de l'écrou, de sorte que le crochet s'engage avec, ou se dégage d'un organe de verrouillage complémentaire solidaire de la structure ;
- que, pour le verrouillage de l'élément de toit avant à une partie de la structure du véhicule, alors que cet élément de toit avant est disposé dans le coffre à côté de l'élément de toit arrière, la tige filetée correspondante s'étendra de préférence au-delà du corps porteur du crochet de verrouillage, pour entraîner en rotation un écrou disposé à son extrémité libre et sur lequel est monté un doigt adapté pour engager, ou se dégager d'un logement prévu dans la paroi correspondante de la structure;
- et que, pour le verrouillage de l'un desdits éléments de toit à une première et une deuxième zones de la structure du véhicule lorsque cet élément de toit est rangé dans le coffre avec l'élément de toit arrière, le pignon entraîné en rotation par le câble flexible concerné engrènera de préférence avec deux autres pignons
   * dont l'un est relié à la tige rigide correspondante, la rotation de cette tige commandant la translation de l'écrou lié à elle, cet écrou étant en outre lié à un doigt de verrouillage saillant en direction de ladite première zone, de manière que la rotation de ladite tige filetée engage ou dégage le doigt de verrouillage vis-à-vis de cette zone,
   * et dont l'autre commande la rotation d'une tige filetée additionnelle liée à son extrémité libre à un doigt additionnel de verrouillage solidaire d'un écrou additionnel vissé sur la tige, de manière que ce doigt additionnel engage avec, ou se dégage de ladite deuxième zone, verrouillant ainsi dans cette position l'élément de toit concerné à ces deux zones différentes de la structure .

Une description encore plus détaillée de l'invention suit, en référence aux dessins annexés à titre d'exemples et dans lesquels :
la figure 1 est une vue en coupe longitudinale d'un toit escamotable rigide équipé d'un système de verrouillage conforme à l'invention,
la figure 2 est une vue en coupe longitudinale de toit escamotable en position rangée dans le coffre arrière du véhicule,
la figure 3 est une vue locale, agrandie du système de verrouillage situé à l'avant de la figure 1 (repère III);
la figure 4 est une vue de dessus de la figure 3;
la figure 5 est une vue agrandie du système de verrouillage situé entre l'élément de toit avant et l'élément de toit intermédiaire de la figure 1 (repère V) ;
la figure 6 est une vue de dessus de la figure 5;
la figure 7 est une vue agrandie du système de verrouillage situé entre l'élément de toit intermédiaire et l'élément de toit arrière de la figure 1 (repère VII) ;
et la figure 8 est une vue de moyens de verrouillage pour les éléments de toit rangés dans le coffre arrière du véhicule.

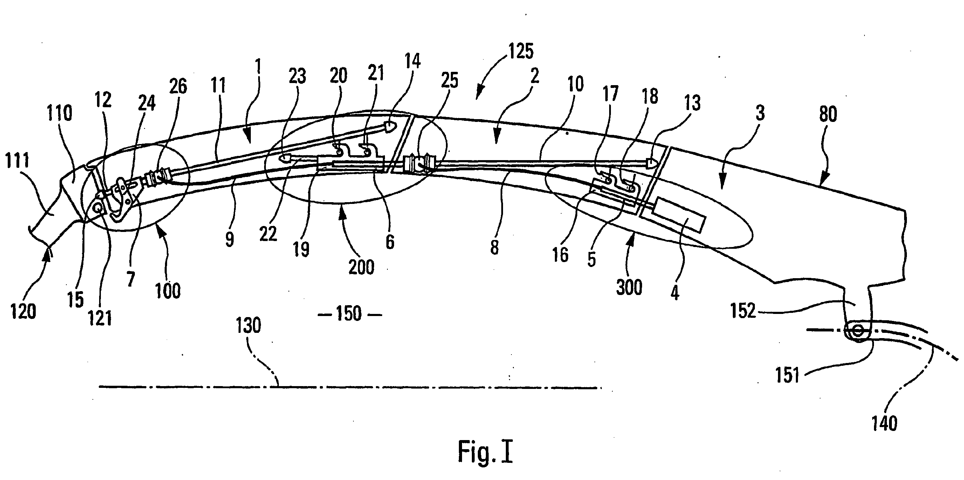

Dans l'exemple de la figure 1, des éléments de toit (a priori rigides) 1,2 et 3 sont verrouillés entre eux par des moyens de verrouillage 100, 200, 300.

L'élément de verrouillage 100 permet de verrouiller l'élément de toit avant 1 à la traverse 110 du pare-brise 111. L'élément de verrouillage 200 permet de verrouiller les éléments de toit avant 1 et intermédiaire 2 entre eux. L'élément de verrouillage 300 permet de verrouiller les éléments de toit intermédiaire 2 et arrière 3 entre eux.

Un moyen de commande, ici un moteur électrique unique 4, entraîne en rotation une tige rigide 5, ici filetée. Le moteur est situé dans l'élément de toit arrière 3.

Sur la tige filetée 5, un écrou (ou patte de verrouillage) 16 est monté et se déplace parallèlement par rapport à la direction longitudinale 120 du véhicule (repéré 125). Sur la partie supérieure de l'écrou 16 se trouve deux crochets 17 et 18 qui viennent verrouiller l'élément de toit arrière 3 avec l'élément de toit intermédiaire 2. Des gâches 31 et 33 solidaires en 30 et 32 de la partie arrière de toit intermédiaire permettent le verrouillage avec les crochets 17 et 18.

Un premier élément flexible constitué avantageusement par un câble torsadé 8 (typiquement métallique) est relié par sa partie arrière 8a à la partie avant 5a de la tige 5, pour transmettre un mouvement de rotation sous la commande de cette tige.

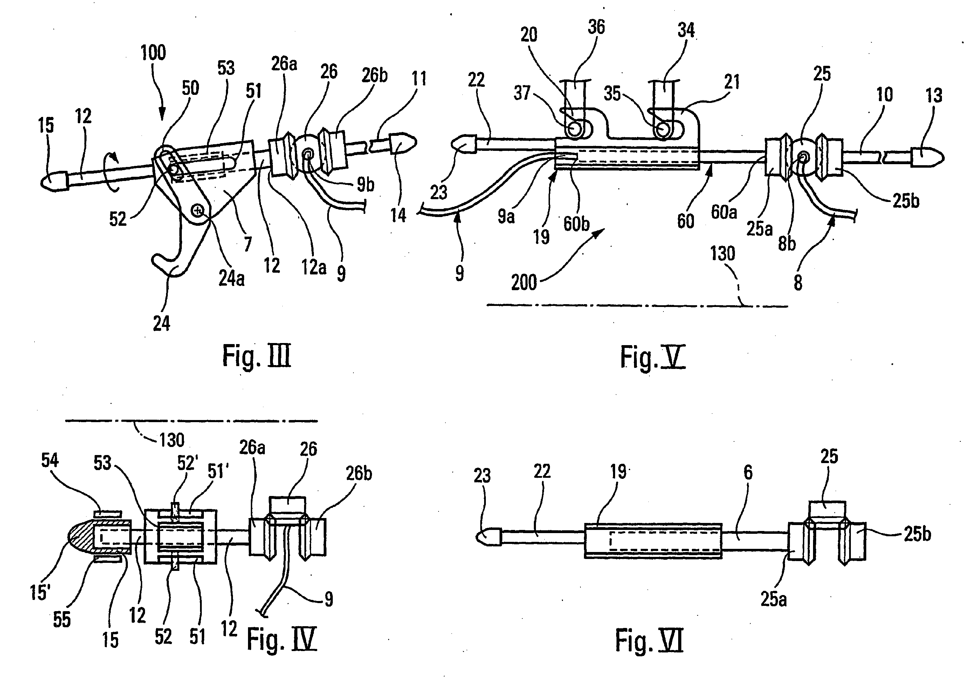

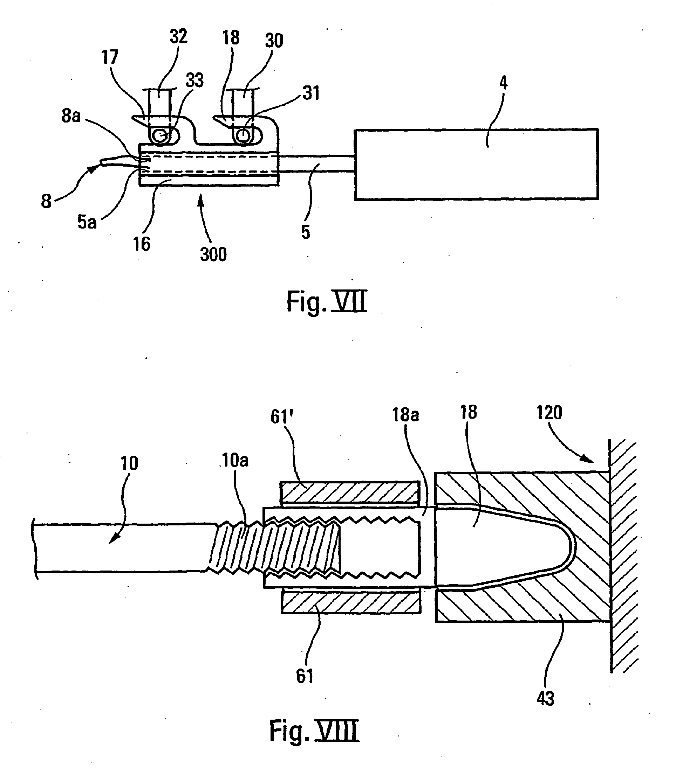

Lorsque la tige 5 entre en rotation, elle entraîne en rotation le flexible 8. La partie avant 8b du flexible 8 est reliée à l'une des parties du moyen de verrouillage 200. Ainsi cette extrémité 8b du flexible 8 entraîne un premier pignon conique 25 qui entraîne en rotation un deuxième pignon conique 25a (figure 5). Ce deuxième pignon 25a entraîne lui-même en rotation une deuxième tige filetée 60 (identique à la tige 5) et qui est reliée à sa partie arrière 60a au pignon conique 25a. La tige 60 entraîne, parallèlement à l'axe longitudinal 130 du véhicule, un écrou 19 (formant une deuxième patte de verrouillage). Sur la partie supérieure de l'écrou 19 se trouvent deux crochets 20 et 21 qui viennent verrouiller l'élément de toit intermédiaire 2 avec l'élément de toit avant 1. Des gâches 35 et 37 solidaires en 34 et 36 de la partie arrière de toit avant 1 permettent le verrouillage avec les crochets 20 et 21.

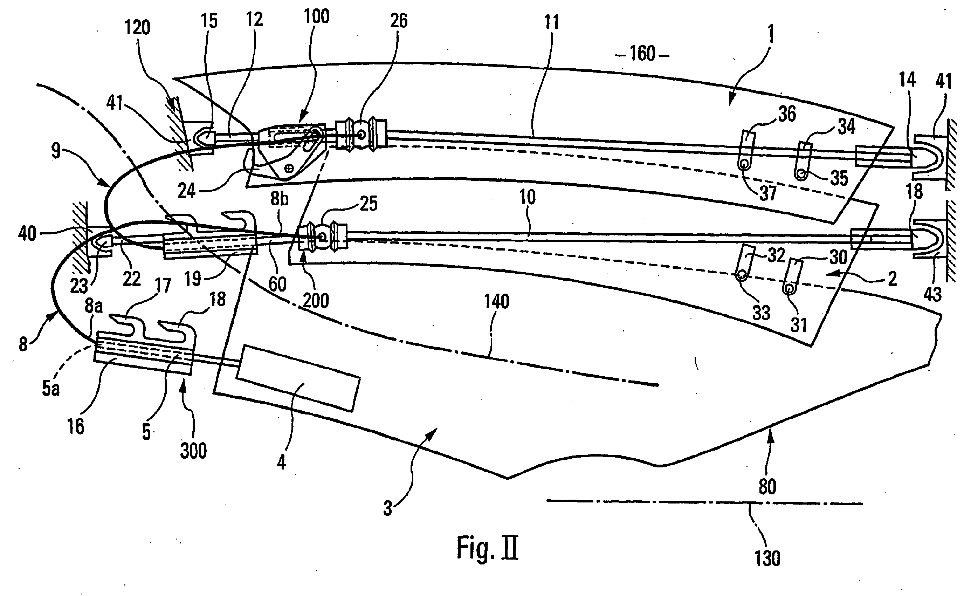

Un second flexible 9 est relié sur sa partie arrière 9a à la partie avant 60a de la tige de verrouillage 60. Lorsque cette tige 60 entre en rotation, via le flexible 8, elle entraîne en rotation le flexible 9. La partie avant 9b du flexible 9 est reliée à une partie du moyen 100 de verrouillage entre l'élément de toit avant 1 et la traverse de pare-brise. L'extrémité avant 9b du flexible 9 entraîne un premier pignon conique 26 qui entraîne en rotation un deuxième pignon conique 26a (figure 3). Ce deuxième pignon conique entraîne lui-même en rotation une troisième tige filetée 12 qui est reliée à sa partie arrière 12a au pignon conique 26a. La tige 12 entraîne, parallèlement à l'axe longitudinal du véhicule, un écrou 53. L'écrou 53 possède sur ses bords latéraux deux ergots 52 et 52' s'étendant perpendiculairement par rapport à l'axe longitudinal 130 du véhicule. L'écrou 53 se déplace axialement dans un corps 7 solidaire de la partie de toit avant 1. Les deux ergots 52. et 52' se déplacent dans deux rainures 51 et 51' du corps 7. Un crochet 24 est monté pivotant sur l'élément 7, selon un axe de rotation 24a perpendiculaire à l'axe 130. Le crochet 24 est entraîné par l'ergot 52 qui se déplace dans une rainure 50 située sur le haut du crochet. Le crochet 24 permet de verrouiller l'élément de toit avant 1 à la traverse de pare-brise et donc au châssis (figure 1). Une gâche 121 peut être prévue à cet effet sur la traverse.

A noter que l'on appelle « châssis » ou « carrosserie » ou encore « structure » du véhicule, toute pièce de structure à laquelle un ou plusieurs éléments de toit peuvent être fixés. Sont ainsi notamment concernés non seulement une glissière (telle que 151 -figure 1- prévue pour guider le mouvement d'entrée/sortie de l'élément arrière 3) ou la traverse de pare-brise 110, mais également, lorsque le véhicule passe en position cabriolet, l'intérieur du coffre ou un berceau contenu dans ce coffre pour recevoir lesdits éléments de toit ou encore le moyen de basculement de toit décrit dans la demande de brevet français déposée sous le N° FR0209217 au nom de France design.

La(les) partie(s) du châssis 120 où se verrouille le toit en position côte à côte des éléments de toit (en particulier position superposée de la figure 2) peuvent donc en particulier correspondre aux parois intérieures du coffre ou à celles d'un berceau recevant intérieurement lesdits éléments de toit en position côte à côte, de préférence horizontale (éléments superposés comme sur la figure 2), ce berceau pouvant être mobile par rapport à la carrosserie.

Dans l'exemple de la figure 2, les éléments de toit rigides 1,2 et 3 sont en position superposée, rangés dans le coffre arrière du véhicule et verrouillés à ses parois latérales intérieures, par les éléments de verrouillage 100, 200, 300.

Pour verrouiller au "châssis" les éléments de toit concernés, dans cette position côte à côte des éléments, on constate qu'ici le moteur électrique 4 verrouille à ce châssis 120 les éléments de toit intermédiaire 2 et avant 1, l'élément arrière 3 étant quant à lui maintenu par sa liaison coulissante avec la (les) glissière(s) 151 et de préférence au moins un bras complémentaire d'entraînement non représenté.

Le moteur entraîne la première tige filetée 5, laquelle entraîne en rotation le flexibles 8. La partie avant 8b du flexible 8 entraîne le premier pignon conique 25 en rotation qui entraîne à son tour le troisième pignon conique 25b (figure 5). Ce troisième pignon entraîne lui-même en rotation la tige filetée 10. Le bord avant 10a de cette tige 10 entraîne l'écrou 18a en translation dans l'axe 130 (figure 8). Le doigt 18 est solidaire de l'écrou 18a et vient se positionner dans un logement 43 solidaire du châssis 120. La partie arrière de toit intermédiaire 2 est alors verrouillée au châssis. Des parois fixes 61,61'(qui peuvent être liées à l'élément 2) bloquent en rotation l'écrou 18a.

Pour verrouiller au châssis la partie avant de ce même élément de toit 2, le premier pignon conique 25 entraîne le deuxième pignon conique 25a qui entraîne lui-même en rotation la tige filetée 60. L'écrou 19 se déplace alors en translation. Sur l'extrémité avant de cet écrou 19 est montée une tige 22 avec à son extrémité avant un doigt 23 qui se déplace avec l'écrou 19 suivant la direction longitudinale 130 du véhicule. Le doigt 23 vient s'engager en position toit ouvert (figure 2) dans un logement 40 solidaire du châssis.

Quant au verrouillage de l'élément avant 1 à ce même châssis, toujours en position côte à côte des éléments de toit (figure 2) il est réalisé comme suit :

La rotation de la tige 5 entraîne celle du deuxième flexible 9, via le premier flexible 8. La partie avant 9b du flexible 9 entraîne le pignon 26 en rotation qui entraîne à son tour le troisième pignon conique 26b (figure 3). Le pignon 26b entraîne alors en rotation la tige filetée 11 qui s'étend suivant la direction 130, dans le sens opposé de la tige 12. A l'image de ce qui est illustré figure 8 et comme déjà décrit pour le verrouillage arrière de l'élément 2 (tige 10), l'extrémité arrière de la tige filetée 11 entraîne un écrou en translation suivant l'axe 130. Un doigt 14 est solidaire de l'écrou. Ce doigt 14 vient se positionner dans un logement 42 solidaire du châssis 120. La partie arrière de toit avant 1 est alors verrouillée au châssis.

Par ailleurs le premier pignon conique 26 a également entraîné le deuxième pignon conique 26a lequel à lui-même entraîné en rotation la troisième tige filetée 12 (figure 4). L'extrémité avant de cette tige 12 a entraîné en translation un écrou 15 sur lequel est monté un doigt de verrouillage 15' qui vient s'engager dans un logement 41 solidaire du châssis 120. Des parois 54,55 fixes (qui peuvent être portées par l'élément 1) bloquent en rotation l'écrou.

La partie avant de toit avant 1 est alors verrouillée à ce châssis.

Dans ce qui précède et sur les figures, le toit 80 du véhicule 125 comprend trois éléments de toit 1, 2, 3 adaptés donc de manière que les éléments avant 1 et intermédiaire 2 soient déplaçables l'un par rapport à l'autre, ainsi que par rapport à l'élément de toit arrière 3 entre une position "alignée" ou "fermée" dans laquelle les trois éléments de toit sont disposés sensiblement dans une continuité, telle que cela est illustré sur la figure 1, et une position ouverte ou "décalée" (figure 2) dans laquelle les éléments 1 et 2 ont été déplacés pour être disposés, avec l'élément 3, côte à côte, et en l'espèce superposés en position sensiblement horizontale.

Pour passer de la position de la figure 1 à celle de la figure 2 (position cabriolet), c'est-à-dire ranger l'ensemble des éléments de toit, en les escamotant à l'intérieur de la carrosserie, on a schématiquement montré sur cette figure 2 le chemin 140 que l'on peut faire suivre à l'élément de toit arrière 3 (et donc à sa suite aux éléments 1 et 2) pour le déplacer entre sa position rangée dans le coffre 160 (comme sur la figure) et sa position sortie de la figure 1 dans laquelle il recouvre une partie au moins de l'habitacle 150, le chemin 140 pouvant être matérialisé notamment sous la forme d'au moins une glissière telle que repérée schématiquement et en partie sur la figure 1 en 151.

Par cette glissière, à laquelle l'élément arrière 3 est reliée ici par une patte 152, l'élément 3 est lié en permanence à la structure 120 du véhicule vis-à-vis de laquelle il s'articule donc entre ses positions sortie (première position) et rangée (deuxième position comme sur la figure 2) .

Bien entendu, un nombre autre que trois éléments de toit pourrait être prévu. Ainsi, le toit 80 pourrait ne comprendre en particulier qu'un élément avant 1 directement relié à l'arrière à l'élément arrière 3.

On pourrait également éventuellement envisager que les éléments de toit soient rangés dans le coffre arrière non pas horizontalement comme ici prévu, mais en position inclinée, voire verticale.

A titre d'alternative, on doit également considérer que le système vis/écrou situé à l'extrémité des tiges 10, 11 et 12 pourrait être intégré ailleurs, par exemple à l'intérieur du corps 7 pour ce concerne l'embout de verrouillage 15, l'important étant d'assurer un mouvement de translation dans la direction de verrouillage/déverrouillage retenue et de pouvoir ainsi engager/dégager à volonté les extrémités de ces tiges par rapport à la zone concernée de la structure, en position côte à côte, rangée (ou prête à être rangée) des éléments de toit.

A noter encore que sur la figure 2, les éléments de toit sont superposés avec la concavité ou le galbe inférieur(e) des deux éléments 1, 2 dirigé(e) vers le bas. On pourrait toutefois prévoir une position « inversée » de ces éléments, l'un galbé vers le haut, l'autre vers le bas, le retournement de l'un des éléments étant intervenu pendant le passage entre la position de la figure 1 et celle rangée dans le coffre.

On notera aussi que dans ce qui précède, les moyens de verrouillage qui ont été présentés peuvent ne concerner latéralement qu'une moitié de véhicule. Ainsi, on les retrouvera de préférence en réalité dupliquer par symétrie axiale (axe 130) entre les parties gauche et droite du véhicule. Concernant le moyen de commande 4, on pourra toutefois ne prévoir qu'un seul moteur pour les deux groupes de tiges et câbles gauches et droits du véhicule avec un câble flexible du type des câbles 8,9 interposé entre la sortie du moteur et chaque première tige 5.

D'autres types de véhicule que celui illustré sont bien entendu concernés par la présente invention. Il pourrait s'agir de véhicules à « coffre intégré », tels que les véhicules monospace, ou encore des véhicules de type pickup.

Dans leur dite deuxième position (position rangée, habitacle découvert), les éléments de toit peuvent par ailleurs, être disposés au dessus d'une zone de coffre arrière, l'important étant qu'une partie structurelle du véhicule soit située dans l'environnement des dits éléments de toit dans cette position de manière qu'ils puissent alors y être verrouillés (bien entendu de manière libérable comme on l'aurait compris).

Ainsi, une disposition des éléments de toit dans leur position rangée, habitacle découvert, au dessus (ou plus généralement à l'extérieur) de la carrosserie du véhicule, typiquement derrière l'habitacle, est ici possible.

En ce qui concerne, de manière tout à fait générale, les moyens flexibles transmettant entre les tiges le mouvement généré par le moyen de commande pour le verrouillage des éléments de toit dans leurs première et deuxième positions, il est clair que l'on pourra prévoir un mouvement autre qu'une rotation, donc une solution différente de celle plus particulièrement illustrée. Ainsi, un mouvement de translation est en particulier envisagé, par exemple en utilisant une solution à vis sans fin, ou tout autre solution déjà proposée dans l'art antérieur, du type à tige rigide ou câble adapté pour transmettre un mouvement de déplacement axial assimilable à une translation (voir solution déjà proposée combinant une tige à vis sans fin associée à un pignon ou une solution par câble de traction ou de poussée résistant à la compression).

Un mécanisme comme dans DE-A-10242725 est également utilisable.

## Revendications

1. Toit déplaçable pour véhicule comprenant plusieurs éléments de toit (1, 2, 3), en particulier un élément de toit avant (1) et un élément de toit arrière (3), déplaçables entre une première position dans laquelle ils recouvrent l'habitacle (150) du véhicule et une deuxième position dans laquelle cet habitacle est au moins en partie découvert, les éléments de toit étant, lorsqu'ils recouvrent l'habitacle, reliés entre eux et à des parties respectivement avant et arrière (111, 151 ; 40, 42) de la structure (120) du véhicule par des moyens de verrouillage commandés par des tiges rigides (5, 60, 10, 11, 12) s'étendant le long des éléments de toit et entraînées en mouvement par un moyen de commande (4), **caractérisé en ce que** les tiges (5, 60, 10, 11, 12) sont reliés en permanence entre elles deux à deux d'un des éléments de toit (1, 2, 3) à un autre, tant dans la première position que dans la deuxième position de ces éléments de toit, par des moyens flexibles (8, 9) transmettant entre ces tiges le mouvement généré par le moyen de commande (4) et permettant ainsi de verrouiller lesdits éléments de toit à la structure (120) du véhicule, tant dans leur première que dans leur deuxième positions.

2. Toit selon la revendication 1 **caractérisé en ce qu'**il est escamoté à l'intérieur de la carrosserie du véhicule, dans la deuxième position des éléments de toit (1, 2, 3).

3. Toit selon la revendication 1 ou 2, **caractérisé en ce que** dans la deuxième position les éléments de toit (1, 2, 3) sont escamotés à l'intérieur du coffre arrière (160) du véhicule.

4. Toit selon l'une quelconque des revendications précédentes, **caractérisé en ce que** chaque moyen flexible comprend un câble (8, 9) adapté pour transmettre un mouvement de rotation sous la commande de l'une des tiges à laquelle il est relié, cette tige étant elle-même commandée en rotation par le moyen de commande (4).

5. Toit selon l'une quelconque des revendications précédentes, **caractérisé en ce que** :
- l'élément de toit avant (1) est déplaçable au-dessus de l'habitacle pour fermer celui-ci dans ladite première position dans laquelle il s'étend sensiblement dans la continuité de l'élément de toit arrière (3), entre lui et une zone de ladite partie avant de la structure immédiatement proche du pare-brise (111) du véhicule,
- les éléments de toit sont en outre déplaçables, ensemble, pour être disposés les uns à côté des autres dans ladite seconde position,
- l'un au moins des moyens flexibles (8, 9) s'étend entre les éléments de toit avant et arrière où il est relié à l'une au moins desdites tiges de liaison correspondantes (5; 10, 60 ; 11, 12),
- et le moyen de commande (4) comprend un moteur de préférence fixé à l'élément de toit arrière (3) et relié à l'une desdites tiges pour transmettre la commande.

6. Toit selon l'une quelconque des revendications précédentes, **caractérisé en ce que**, pour verrouiller deux desdits éléments de toit entre eux (1, 2) dans la première position, la tige (5, 60) liée au moyen de commande (4) fixé à l'un de ces éléments de toit est filetée et reliée à une patte de verrouillage (16, 19) appartenant aux dits moyens de verrouillage des éléments de toit entre eux, cette patte définissant un écrou mis en mouvement par cette tige et étant adaptée pour coopérer avec un moyen complémentaire de verrouillage (30, 32 ; 34, 36) fixé à l'autre élément de toit, la patte de verrouillage étant mobile sous la commande du moyen de commande pour engager le moyen complémentaire, ou s'en dégager, alors que lesdits éléments de toit sont disposés en continuité, le mouvement de la tige filetée entraînant celle du moyen flexible correspondant (8, 9) qui relie cette tige à au moins une autre tige portée par l'autre élément de toit à verrouiller.

7. Toit selon la revendication 6, **caractérisé en ce que** la patte de verrouillage est mobile en translation sous la commande du moyen de commande et le mouvement de la tige filetée est une rotation.

8. Toit selon l'une des revendications 1 à 4, **caractérisé en ce que** :
- les éléments de toit comprennent un élément de toit intermédiaire (2), entre les éléments de toit avant (1) et arrière (3),
- l'élément de toit avant (1) est déplaçable au-dessus de l'habitacle pour fermer celui-ci dans ladite première position dans laquelle il s'étend sensiblement dans la continuité de l'élément de toit arrière (3), entre lui et une zone de ladite partie avant de la structure immédiatement proche du pare-brise (111) du véhicule,
- les éléments de toit sont en outre déplaçables, ensemble, pour être disposés les uns à côté des autres dans ladite seconde position,
- les moyens flexibles (8, 9) s'étendent chacun entre deux éléments de toit successifs, les tiges de liaison (5, 10, 60, 11, 12) auxquelles sont liés ces moyens flexibles vers l'une et l'autre de leurs extrémités s'étendant le long desdits éléments de toit concernés,
- le moyen de commande comprend un moteur (4) de préférence fixé à l'élément de toit arrière (3) et relié à la tiges correspondante pour transmettre la commande en rotation,
- pour verrouiller deux desdits éléments de toit entre eux dans la première position, l'une au moins desdites tiges portée par l'un desdits éléments de toit est filetée et reliée
* d'un côté à l'un des moyens flexibles (8, 9), par l'intermédiaire de pignons (25, 25a, 25b ; 26, 26a, 26b) engrenant ensemble et dont l'un est entraîné en rotation par ledit moyen flexible,
* et d'un autre côté à une patte de verrouillage (16, 16a) appartenant aux dits moyens de verrouillage des éléments de toit entre eux, cette patte définissant un écrou mis en mouvement par la tige et étant adaptée pour coopérer avec un moyen complémentaire de verrouillage (30, 32, 34, 36) fixé à l'autre élément de toit, la patte de verrouillage étant mobile sous la commande initiale du moyen de commande (4) pour engager le moyen complémentaire, ou s'en dégager, alors que lesdits éléments de toit concernés sont disposés dans la continuité l'un de l'autre.

9. Toit selon la revendication 8, **caractérisé en ce que** la patte de verrouillage (16, 16a) est mobile en translation sous la commande du moyen de commande (4).

10. Toit selon l'une quelconque des revendications précédentes **caractérisé en ce que**, pour verrouiller l'élément de toit avant (1) à une zone (110) de la structure immédiatement proche du pare-brise du véhicule, alors que lesdits éléments de toit sont dans leur première position, avec l'élément de toit avant (1) disposé sensiblement dans la continuité de l'élément de toit arrière (3), l'une au moins des tiges (12) portées par l'élément de toit avant est filetée et reliée :
* d'un côté à l'un des moyens flexibles (9), par l'intermédiaire de pignons (26, 26a, 26b) engrenant ensemble et dont l'un est entraîné en rotation par ledit moyen flexible,
* et d'un autre côté à un écrou de liaison (53) entraîné par la tige et se déplaçant ainsi dans un corps (7) solidaire de l'élément de toit avant (1), un crochet de verrouillage (24) appartenant aux dits moyens de verrouillage étant monté pivotant sur le corps, son pivotement étant commandé par le déplacement en translation de l'écrou (53), de sorte que le crochet s'engage avec, ou se dégage d'un organe de verrouillage complémentaire (121) solidaire de la structure (110, 120) .

11. Toit selon la revendication 10, **caractérisé en ce que**, pour le verrouillage de l'élément de toit avant (1) à une partie de la structure (120) du véhicule, alors que cet élément de toit avant est disposé à côté de l'élément de toit arrière, ladite tige filetée (120) correspondante s'étend au-delà du corps (7) porteur du crochet de verrouillage (24), pour entraîner en rotation un écrou (15, 15') disposé vers son extrémité libre et sur lequel est monté un doigt adapté pour engager, ou se dégager d'un logement (41) prévu dans ladite partie de la structure (120).

12. Toit selon la revendication 6 ou 7, **caractérisé en ce que** :
- les éléments de toit comprennent en outre un élément de toit intermédiaire (2), entre les éléments de toit avant et arrière et,
- l'élément de toit avant (1) est déplaçable au-dessus de l'habitacle pour fermer celui-ci dans ladite première position dans laquelle il s'étend sensiblement dans la continuité de l'élément de toit arrière (3), entre lui et une zone de ladite partie avant de la structure immédiatement proche du pare-brise (111) du véhicule,
- les éléments de toit sont en outre déplaçables, ensemble, pour être disposés les uns à côté des autres dans ladite seconde position,
- et, pour verrouiller dans cette seconde position l'élément de toit intermédiaire à une zone de la structure (120) du véhicule, une tige complémentaire (22) fait saillie de la patte de verrouillage (19) liée à l'élément de toit intermédiaire (2), en direction de ladite zone de la structure, cette tige complémentaire étant pourvue, vers une extrémité, d'un doigt (23) qui se déplace avec ledit écrou (19), ce doigt engageant, ou se dégageant d'un logement solidaire de ladite zone de structure, en fonction du sens de déplacement de l'écrou.

13. Toit selon l'une au moins des revendications 8 à 10, **caractérisé en ce que**, pour le verrouillage de l'un desdits éléments de toit à une première et une deuxième zones de la structure (120) du véhicule lorsque les éléments de toit sont dans leur deuxième position, le pignon (25, 26) entraîné en rotation par le moyen flexible concerné engrène avec deux autres pignons (26a, 26b ; 25a, 25b)
* dont l'un est relié à la tige rigide correspondante (12, 60), la rotation de cette tige commandant la translation de l'écrou (7, 19) lié à elle, cet écrou étant en outre lié à un doigt de verrouillage (15, 23) saillant en direction de la première zone de la structure, de manière que la rotation de ladite tige filetée engage ou dégage le doigt de verrouillage vis-à-vis de cette zone,
* et dont l'autre commande la rotation d'une tige filetée additionnelle (10, 11) liée à son extrémité libre à un doigt additionnel de verrouillage solidaire d'un écrou additionnel vissé sur la tige, de manière que ce doigt additionnel engage avec, ou se dégage de ladite deuxième zone du coffre, verrouillant ainsi dans cette position l'élément de toit concerné à ces deux zones différentes de la structure.

14. Toit selon l'une des revendications 1 à 4, **caractérisé en ce que**, tant pour verrouiller de manière libérable les éléments (1,2,3) de toit ensemble, alors qu'ils sont au-dessus de l'habitacle du véhicule (150), disposés dans la continuité les uns des autres, que pour verrouiller au moins certains de ces éléments de toit aux dites parties avant et arrière de la structure (120), alors que ces éléments sont dans leur seconde position, côte à côte, les tiges rigides comprennent au moins deux tiges (10,60;11,12) pour chaque élément de toit à verrouiller, ces au moins deux tiges étant filetées et commandées ensemble en rotation par des moyens intermédiaires de transmission (25,26) entraînés en rotation par l'un desdits moyens flexibles (8,9), lesdites au moins deux tiges s'étendant à partir de ce moyen intermédiaire de transmission suivant deux sens opposés jusqu'au-delà des extrémités respectivement avant et arrière de l'élément de toit concerné (1,2), suivant une direction sensiblement parallèle à la direction longitudinale (130) du véhicule, chacune desdites tiges se terminant par un écrou (7,15,18a,19) vissé sur la tige concernée, l'écrou étant relié à un embout de verrouillage (15',18,23) commandé donc en translation suivant ladite direction longitudinale du véhicule pour engager, ou se dégager d'une desdites parties avant ou arrière de la structure.

15. Toit selon la revendication 14, **caractérisé en ce que**, dans leur deuxième position, les éléments (1,2,3) de toit sont côte à côte

16. Toit selon la revendication 14 ou 15, **caractérisé en ce que**, pour verrouiller ensemble lesdits éléments de toit, l'écrou (19) lié à l'une des tiges d'un des éléments de toit définit une patte de verrouillage mise en mouvement par la tige (60) et adaptée pour crocheter un moyen complémentaire de verrouillage (34,36) fixé à un autre desdits éléments de toit, la patte de verrouillage étant donc mobile en translation sous la commande de ladite tige elle-même entraînée par le moyen flexible (8) concerné, pour engager le moyen complémentaire, ou s'en dégager, alors que les éléments de toit sont disposés dans la continuité les uns des autres.

17. Toit selon l'une des revendications 14 à 16, **caractérisé en ce que**, pour verrouiller l'élément de toit avant (1) à une zone de la structure immédiatement proche du pare-brise (111) du véhicule, dans ladite première position des éléments de toit, alors que ceux-ci sont sensiblement alignés dans la continuité les uns des autres, l'écrou (7,53) lié à l'une desdites tiges filetées lié à l'élément de toit avant porte un moyen d'ancrage (24) monté pivotant sur l'écrou, sous la commande de ladite tige fileté, de manière à coopérer de manière libérable avec un moyen complémentaire d'encrage (121) fixé à ladite zone (110) de la structure immédiatement proche du pare-brise du véhicule.

18. Toit selon l'une quelconque des revendications précédentes, **caractérisé en ce que**, dans leur deuxième position, les éléments (1,2,3) de toit sont disposés sensiblement horizontalement, superposés les uns au-dessus des autres.

19. Véhicule pourvu d'un toit déplaçable selon l'une quelconque des revendications précédentes.

## Claims

1. Displaceable roof for a vehicle comprising several roof elements (1, 2, 3), in particular a front roof element (1) and a rear roof element (3), displaceable between a first position in which they cover the passenger compartment (150) of the vehicle and a second position in which this passenger compartment is at least partly exposed, the roof elements being, when they cover the passenger compartment, connected to each other and to respectively front and rear parts (111, 151; 40, 42) of the structure (120) of the vehicle through locking means controlled by rigid rods (5, 60, 10, 11, 12) extending along the roof elements and being driven by controlling means (4), **characterized in that** the rods (5, 60, 10, 11, 12) are constantly connected to each other in pairs from one of the roof elements (1, 2, 3) to another, in the first position as well as in the second position of these roof elements, by flexible means (8, 9) transmitting the movement generated by the controlling means (4) between these rods and thus allowing to lock said roof elements to the structure (120) of the vehicle, in their first as well as in their second positions.

2. Roof according to claim 1, **characterized in that** it is retracted inside the bodywork of the vehicle, in the second position of the roof elements (1, 2, 3).

3. Roof according to claim 1 or 2, **characterized in that** in the second position the roof elements (1, 2, 3) are retracted on the inside of the rear boot (160) of the vehicle.

4. Roof according to any one of the previous claims,
**characterized in that** each flexible means comprise a cable (8, 9) adapted for transmitting a rotary movement controlled by one of the rods to which it is connected, this rod itself being rotated by the controlling means (4).

5. Roof according to the previous claim, **characterized in that**:
- the front roof element (1) is displaceable above the passenger compartment to close it in said first position in which said front roof element substantially extends in continuity relative to the rear roof element (3), between said rear roof element and a zone of said front part of the structure immediately close to the windscreen (111) of the vehicle;
- the roof elements are, in addition, displaceable together so as to be arranged side by side in said second position;
- at least one of the flexible means (8, 9) extends between the front and rear roof elements where it is connected to at least one of said corresponding connecting rods (5, 10, 60; 11, 12); and
- the controlling means (4) comprise a motor preferably fixed to the rear roof element (3) and connected to one of said rods in order to transmit the command.

6. Roof according to any one of the previous claims, **characterized in that**, to lock two of said roof elements (1, 2) to each other in the first position, the rod (5, 60) connected to the controlling means (4) fixed to one of these roof elements is threaded and connected to a locking tab (16, 19) belonging to said means for locking the roof elements to each other, this tab defining a nut put into motion by this rod and being adapted for engaging complementary locking means (30, 32; 34, 36) fixed to the other roof element, the locking tab being movable under the control of the controlling means in order to engage, or disengage, the complementary locking means, whilst said roof elements are placed in continuity, the movement of the threaded rod driving the corresponding flexible means (8, 9) which connects this rod to at least another rod supported by the other roof element to be locked.

7. Roof according to claim 6, **characterized in that** the locking tab is movable in translation under the control of the controlling means and the movement of the threaded rod is a rotation.

8. Roof according to one of claims 1 to 4, **characterized in that**:
- the roof elements comprise an intermediate roof element (2), between the front (1) and rear (3) roof elements;
- the front roof element (1) is displaceable above the passenger compartment to close it in said first position in which it substantially extends in continuity relative to the rear roof element (3), between it and a zone of said front part of the structure immediately close to the windscreen (111) of the vehicle;
- the roof elements are, in addition, displaceable together so as to be arranged side by side in said second position;
- the flexible means (8, 9) each extend between two successive roof elements, the connecting rods (5, 10, 60, 11, 12) to which these flexible means are connected toward one and the other of their ends extending along said concerned roof elements;
- the controlling means comprise a motor (4) preferably fixed to the rear roof element (3) and connected to the corresponding rod in order to transmit the rotation command;
- to lock two of said roof elements to each other in the first position, at least one of said rods supported by one of said roof elements is threaded and connected,
* on one side, to one of the flexible means (8, 9), via pinions (25, 25a, 25b; 26, 26a, 26b) meshing together and of which one is rotated by said flexible means,
* and, on another side, to a locking tab (16, 16a) belonging to said locking means for locking the roof elements to each other, this tab defining a nut put into motion by the rod and being adapted for engaging complementary locking means (30, 32, 34, 36) fixed to the other roof element, the locking tab being movable under the initial control of the controlling means (4) in order to engage, or disengage, the corresponding complementary locking means, whilst said concerned roof elements are placed in continuity relative to each other.

9. Roof according to claim 8, **characterized in that** the locking tab (16, 16a) is movable in translation controlled by the controlling means (4).

10. Roof according to any one of the previous claims, **characterized in that**, to lock the front roof element (1) to a zone of the structure (110) immediately close to the windscreen of the vehicle, whilst said roof elements are in their first position, with the front roof element (1) placed substantially in the continuity of the rear roof element (3), at least one of the rods (12) supported by the front roof element is threaded and connected:
* on one side, to the flexible means (9), trough pinions (26, 26a, 26b) meshing together and of which one is rotated by said flexible means;
* and, on another side, to a connecting nut (53) driven by the rod and thus being displaced in a body (7) fixed to the front roof element (1), a locking hook (24) attached to said locking means being pivotally mounted onto the body, its pivotal movement being controlled by a displacement in translation of the nut (53), so that the locking hook engages, or disengages, a complementary locking member (121) fixed to the structure (110, 120).

11. Roof according to claim 10, **characterized in that**, to lock the front roof element (1) to a part of the structure (120) of the vehicle, whilst this front roof element is close to the rear roof element, said corresponding threaded rod (120) extends passed the body (7) bearing the locking hook (24), in order to rotate a nut (15,15') placed close to a free end thereof and on which a pin is mounted for engaging, or disengaging, a housing (41) made in said part of the structure (120).

12. Roof according to claim 6 or 7, **characterized in that**:
- the roof elements further comprise an intermediate roof element (2), between the front and rear roof elements; and
- the front roof element (1) is displaceable above the passenger compartment to close it in said first position in which it substantially extends in continuity relative to the rear roof element (3), between it and a zone of said front part of the structure immediately close to the windscreen (111) of the vehicle;
- the roof elements are, in addition, displaceable together so as to be arranged side by side in said second position;
- and, to lock in this second position the intermediate roof element to a zone of the structure (120) of the vehicle, a complementary rod (22) projects from the locking tab (19) connected to the intermediate roof element (2), in the direction of said zone of the structure, this complementary rod being fitted, at one end, with a pin (23) which moves with said nut (19), this pin engaging, or disengaging, a housing fixed to said zone of the structure, depending on the displacement direction of the nut.

13. Roof according to at least one of claims 8 to 10, **characterized in that**, to lock one of said roof elements to a first and a second zones of the structure (120) of the vehicle when the roof elements are in their second position, the pinion (25, 26) rotated by the concerned flexible means engages with two other pinions (26a, 26b; 25a, 25b),
* of which one is connected to the corresponding rigid rod (12, 60), the rotation of said rod controlling the translation of the nut (7, 19) connected thereto, said nut, in addition, being connected to a locking pin (15, 23) projecting in the direction of the first zone of the structure, so that the rotation of said threaded rod engages or disengages the locking pin with respect to said zone,
* and of which the other one controls the rotation of an additional threaded rod (10, 11) connected at its free end to an additional locking pin fixed to an additional nut screwed to the rod, so that said additional pin engages with, or disengages from, said second zone of the boot, thus locking the concerned roof element in said position to said two different zones of the structure.

14. Roof according to one of claims 1 to 4, **characterized in that**, as much to lock, in a releasable manner, the roof elements (1, 2, 3) together, whilst they are above the passenger compartment of the vehicle (150), placed in continuity to each other, as to lock at least some of said roof elements to said front and rear parts of the structure (120), whilst said elements are in their second position, side by side, the rigid rods comprise at least two rods (10, 60; 11, 12) for each roof element to be locked, these at least two rods being threaded and controlled together in rotation by intermediary transmitting means (25, 26) rotated by one of said flexible means (8, 9), said at least two rods extending from said intermediary transmitting means along two opposing directions until beyond the respectively front and rear ends of the concerned roof element (1, 2), along a direction substantially parallel to the longitudinal direction (130) of the vehicle, each of said rods ending with a nut (7, 15, 18a, 19) screwed to the concerned rod, the nut being connected to a locking connector (15', 18, 23) thus controlled in translation along said longitudinal direction of the vehicle in order to engage, or disengage, one of said front or rear parts of the structure.

15. Roof according to claim 14, **characterized in that**, in their second position, the roof elements (1, 2, 3) are side by side.

16. Roof according to claim 14 or 15, **characterized in that**, to lock said roof elements together, the nut (19) connected to one of the rods of one of the roof elements defines a locking tab put into motion by the rod (60) and adapted for hooking a complementary locking means (34, 36) fixed to another of said roof elements, the locking tab thus being movable in translation controlled by said rod itself driven by the concerned flexible means (8), in order to engage, or disengage, the complementary means, whilst the roof elements are placed in continuity relative to each other.

17. Roof according to one of claims 14 to 16, **characterized in that**, to lock the front roof element (1) to a zone of the structure immediately close to the windscreen (111) of the vehicle, in said first position of the roof elements, whilst the latter are substantially aligned in continuity to each other, the nut (7, 53) connected to one of said threaded rods connected to the front roof element bears an attaching means (24), pivotally mounted on the nut, controlled by said threaded rod, so as to releasably engage a complementary attaching means (121) fixed to said zone (110) of the structure immediately close to the windscreen of the vehicle.

18. Roof according to any one of the previous claims, **characterized in that**, in their second position, the roof elements (1, 2, 3) are placed substantially horizontal, stacked one on top of the other.

19. Vehicle fitted with a displaceable roof according to any one of the previous claims.

## Patentansprüche

1. Verschiebbares Dach für ein Fahrzeug mit mehreren Dachelementen (1, 2, 3), insbesondere einem vorderen Dachelement (1) und einem hinteren Dachelement (3), die zwischen einer ersten Position, in welcher sie den Fahrgastraum (150) des Fahrzeugs abdecken, und einer zweiten Position, in welcher dieser Fahrgastraum wenigstens teilweise aufgedeckt ist, verschiebbar sind, wobei die Dachelemente, wenn sie den Fahrgastraum abdecken, untereinander und mit jeweils vorderen und hinteren Bereichen (111, 151; 40, 42) der Struktur (120) des Fahrzeugs durch eine Verriegelungseinrichtung verbunden sind, die durch starre Stangen (5, 60, 10, 11, 12) gesteuert wird, die sich entlang der Dachelemente erstrecken und durch eine Steuereinrichtung (4) in Bewegung gesetzt werden, **dadurch gekennzeichnet, dass** die Stangen (5, 60, 10, 11, 12) untereinander paarweise von einem Dachelement (1, 2, 3) zu einem anderen, sowohl in der ersten Position als auch in der zweiten Position dieser Dachelemente, durch flexible Elemente (8, 9) verbunden sind, die zwischen diesen Stangen die durch die Steuereinrichtung (4) erzeugte Bewegung übertragen und somit ermöglichen, die Dachelemente an der Struktur (120) des Fahrzeugs zu verriegeln, sowohl in ihrer ersten als auch in ihrer zweiten Position.

2. Dach nach Anspruch 1, **dadurch gekennzeichnet, dass** dieses in der zweiten Position der Dachelemente (1, 2, 3) in das innere der Karosserie des Fahrzeugs eingefahren ist.

3. Dach nach Anspruch 1 oder 2, **dadurch gekennzeichnet, dass** in der zweiten Position die Dachelemente (1, 2, 3) in das Innere des hinteren Kofferraumes (160) des Fahrzeugs eingefahren sind.

4. Dach nach einem der vorhergehenden Ansprüche, **dadurch gekennzeichnet, dass** jedes flexible Element ein Kabel (8, 9) umfasst, das so ausgebildet ist, dass dieses unter der Steuerung einer der Stangen, mit welcher dieses verbunden ist, eine Drehbewegung überträgt, wobei diese Stange selbst durch die Steuereinrichtung (4) drehgesteuert wird.

5. Dach nach einem der vorhergehenden Ansprüche, **dadurch gekennzeichnet, dass**:
- das vordere Dachelement (1) über den Fahrgastraum verschiebbar ist, um diesen in der ersten Position zu verschließen, in welcher sich dieses im Wesentlichen in Kontinuität des hinteren Dachelements (3) erstreckt, zwischen diesem und einer Zone des vorderen Bereichs der Struktur, unmittelbar an der Windschutzscheibe (111) des Fahrzeugs,
- die Dachelemente ferner zusammen verschiebbar, um diese in der zweiten Position jeweils nebeneinander anzuordnen,
- wenigstens eines der flexiblen Elemente (8, 9) sich dem vorderen und dem hinteren Dachelement erstreckt, wo dieses mit wenigstens einer der entsprechenden Verbindungsstangen (5; 10, 60; 11, 12) verbunden ist,
- und die Steuereinrichtung (4) einen vorzugsweise an dem hinteren Dachelement (3) befestigten und mit einer der Stangen zur Übertragung der Steuerung verbundenen Motor aufweist.

6. Dach nach einem der vorhergehenden Ansprüche, **dadurch gekennzeichnet, dass**, um zwei der Dachelemente untereinander (1, 2) in der ersten Position zu verriegeln, die Stange (6, 60), die mit der an einem dieser Dachelemente befestigten Steuereinrichtung (4) verbunden ist, mit einem Gewinde versehen ist und mit einer Verriegelungsklaue (16, 19) verbunden ist, die zu den Verriegelungseinrichtungen der Dachelemente untereinander gehört, wobei diese Klaue eine Mutter bildet, die durch diese Stange in Bewegung gesetzt wird und so ausgebildet ist, dass diese mit einer komplementären Verriegelungseinrichtung (30, 32; 34, 36) zusammenwirkt, die an dem anderen Dachelement befestigt ist, wobei die Verriegelungsklaue unter der Steuerung der Steuereinrichtung so beweglich ist, dass sie an die komplementäre Einrichtung angreift, oder sich von dieser löst, so dass die Dachelemente in Kontinuität angeordnet sind, wobei die Bewegung der Gewindestange dasjenige des korrespondierenden flexiblen Elements (8, 9) antreibt, das diese Stange mit wenigstens einer weiteren durch das zu verriegelnde Dachelement gehaltenen Stange verbindet.

7. Dach nach Anspruch 6, **dadurch gekennzeichnet, dass** die Verriegelungsklaue unter der Steuerung der Steuereinrichtung translatorisch beweglich ist und die Bewegung der Gewindestange eine Drehung ist.

8. Dach nach einem der Ansprüche 1 bis 4, **dadurch gekennzeichnet, dass**:
- die Dachelemente ein Zwischen-Dachelement (2) zwischen dem vorderen Dachelement (1) und dem hinteren (3) umfassen,
- das vordere Dachelement (1) über den Fahrgastraum verschiebbar ist, um diesen in der ersten Position zu verschließen, in welcher sich dieses im Wesentlichen in Kontinuität mit dem hinteren Dachelement (3) erstreckt, zwischen diesem und einer Zone des vorderen Bereichs der Struktur, unmittelbar an der Windschutzscheibe (111) des Fahrzeugs,
- die Dachelemente ferner zusammen verschiebbar sind, um jeweils nebeneinander in der zweiten Position angeordnet zu sein,
- die flexiblen Elemente (8, 9) sich jeweils zwischen zwei aufeinanderfolgenden Dachelementen erstrecken, wobei die Verbindungsstangen (5, 10, 60, 11, 12), mit denen diese flexiblen Elemente an dem einen und anderen ihrer Enden verbunden sind, sich entlang der betreffenden Dachelemente erstrecken,
- die Steuereinrichtung einen Motor (4) umfasst, der vorzugsweise an dem hinteren Dachelement (3) befestigt ist und mit der korrespondierenden Stange verbunden ist, um die Drehsteuerung zu übertragen,
- um zwei der Dachelemente untereinander in der ersten Position zu verriegeln, wobei wenigstens eine der Stangen, die durch eines der Dachelemente getragen wird, mit einem Gewinde versehen ist und
* einerseits mit den flexiblen Elementen (8, 9) mittels Zahnrädern (25, 25a, 25b; 26, 26a, 26b) verbunden ist, die ineinandergreifen und von denen eines durch das flexible Element in Drehung versetzt wird,
* und andererseits mit einer Verriegelungsklaue (16, 16a) verbunden ist, die zu der Verriegelungseinrichtung der Dachelemente untereinander gehört, wobei diese Klaue eine Mutter bildet, die durch die Stange in Bewegung versetzt wird und so ausgebildet ist, dass sie mit einer komplementären Verriegelungseinrichtung (30, 32, 34, 36) zusammenwirkt, die an dem anderen Dachelement befestigt ist, wobei die Verrieglungsklaue unter der Initialsteuerung der Steuereinrichtung (4) beweglich ist, um in die komplementäre Einrichtung einzugreifen oder sich von dieser zu lösen, so dass die betreffenden Dachelemente in Kontinuität zueinander angeordnet sind.

9. Dach nach Anspruch 8, **dadurch gekennzeichnet, dass** die Verriegelungsklaue (16, 16a) unter der Steuerung der Steuereinrichtung (4) translatorisch beweglich ist.

10. Dach nach einem der vorhergehenden Ansprüche, **dadurch gekennzeichnet, dass**, für ein Verriegeln des vorderen Dachelements (1) mit einer Zone (110) der Struktur unmittelbar an der Windschutzscheibe des Fahrzeugs, so dass sich die Dachelemente in ihrer ersten Position befinden, wobei das vordere Dachelement (1) im Wesentlichen in Kontinuität mit dem hinteren Dachelement (3) angeordnet ist, wenigstens eine der Stangen (12), die durch das vordere Dachelement gehalten werden, mit einem Gewinde versehen ist, und:
* einerseits mit einem der flexiblen Elemente (9) mittels Zahnrädern (26, 26a, 26b) verbunden ist, die ineinander eingreifen und von denen eines durch das flexible Element in Drehung versetzt wird, verbunden ist,
* und andererseits mit einer Verbindungsschraube (53) verbunden ist, die durch die Stange angetrieben wird und sich auf diese Weise in ein Gehäuse (7) verschiebt, das mit dem vorderen Dachelement (1) fest verbunden ist, wobei ein Verriegelungshaken (24), der zu den Verriegelungseinrichtungen gehört, an dem Gehäuse schwenkbar angebracht ist, wobei dessen Schwenkbewegung durch die translatorische Verschiebung der Mutter (53) gesteuert wird, derart, dass der Haken in ein komplementäres Verriegelungsorgan (121) eingreift, das fest mit der Struktur (110, 120) verbunden ist oder sich von diesem löst.

11. Dach nach Anspruch 10, **dadurch gekennzeichnet, dass** für die Verriegelung des vorderen Dachelements (1) mit einem Teil der Struktur (120) des Fahrzeugs, so dass das vordere Dachelement neben dem hinteren Dachelement angeordnet ist, sich die korrespondierende, mit Gewinde versehene Stange (120) über das Gehäuse (7) des Verriegelungshakens (24) hinaus erstreckt, um eine Mutter (15, 15'), die an ihrem freien Ende angeordnet ist, in Drehung zu versetzen, und auf welcher ein Finger angebracht ist, der so ausgebildet ist, dass dieser in eine in dem Bereich der Struktur (120) vorgesehene Aufnahme (41) eingreift oder sich aus dieser löst.

12. Dach nach Anspruch 6 oder 7, **dadurch gekennzeichnet, dass**:
- die Dachelemente ferner ein Zwischen-Dachelement (2) zwischen dem vorderen und hinteren Dachelement umfassen, und
- das vordere Dachelement (1) über den Fahrgastraum verschiebbar ist, um diesen in der ersten Position zu verschließen sich dieses im Wesentlichen in Kontinuität mit dem hinteren Dachelement (3) erstreckt, zwischen diesem und einem vorderen Bereich der Struktur, unmittelbar an der Windschutzscheibe (111) des Fahrzeugs,
- die Dachelemente ferner zusammen verschiebbar sind, um jeweils nebeneinander in der zweiten Position angeordnet zu sein,
- und, um in dieser zweiten Position das Zwischen-Dachelement mit einer Zone der Struktur (120) des Fahrzeugs zu verriegeln, einer komplementären Stange (22), die von der mit dem Zwischen-Dachelement (2) verbundenen Verriegelungsklaue (19) in Richtung der Zone der Struktur vorsteht, wobei diese komplementäre Stange an einem Ende mit einer Finger (23) versehen ist, der sich mit der Mutter (19) verschiebt, wobei dieser Daumen in eine mit der Zone der Struktur fest verbundenen Aufnahme in Abhängigkeit von der Verschiebungsrichtung der Mutter eingreift oder aus dieser löst.

13. Dach nach wenigstens einem der Ansprüche 8 bis 10, **dadurch gekennzeichnet, dass**, für die Verriegelung eines der Dachelemente in einer ersten und einer zweiten Zone der Struktur (120) des Fahrzeugs, wenn sich die Dachelemente in ihrer zweiten Position befinden, das Zahnrad (25, 26), das durch das betreffende flexible Element in Drehung versetzt wird, in zwei weitere Zahnräder (26a, 26b; 25a, 25b) eingreift
* von denen eines mit der korrespondierenden starren Stange (12, 60) verbunden ist, wobei die Drehung dieser Stange die Verschiebung der mit dieser verbundenen Mutter (7, 19) steuert, wobei diese Mutter ferner mit einem Verriegelungsfinger (15, 23) verbunden ist, der in Richtung der ersten Zone der Struktur vorsteht, so dass die Drehung der mit Gewinde versehenen Stange den Verriegelungsfinger mit dieser Zone in Eingriff bringt oder aus dieser löst,
* und von denen das andere die Drehung einer zusätzlichen mit Gewinde versehenen Stange (10, 11) steuert, die mit ihrem freien Ende mit einem zusätzlichen Verriegelungsfinger verbunden ist, der fest mit einer auf die Stange geschraubten zusätzlichen Mutter verbunden ist, so dass dieser zusätzliche Finger in die zweite Zone des Kofferraumes eingreift oder sich aus dieser löst und auf diese Weise in dieser Position das betreffende Dachelement an diesen beiden unterschiedlichen Zonen der Struktur verriegelt.

14. Dach nach einem der Ansprüche 1 bis 4, **dadurch gekennzeichnet, dass** sowohl zum Verriegeln der gesamten Dachelemente (1, 2, 3) in freier Weise, während sich diese oberhalb des Fahrgastraumes des Fahrzeugs (150) befinden, angeordnet in Kontinuität zueinander, als auch zum Verriegeln wenigstens einiger dieser Dachelemente an den vorderen und hinteren Teilen der Struktur (120) zu verriegeln, während diese Elemente in ihrer zweiten Position sind, nebeneinander, wobei die starren Standen wenigstens zwei Stangen (10, 60; 11, 12) für jedes zu verriegelnde Dachelement umfassen, wobei diese wenigstens zwei Stangen mit Gewinde versehen sind und zusammen durch Zwischen-Übertragungselemente (25, 26) in Drehung versetzt werden, die durch eines der flexiblen Elemente (8, 9) in Drehung versetzt werden, wobei sich die wenigstens zwei Stangen aus diesem Zwischen-Übertragungselement in zwei entgegengesetzte Richtungen heraus erstrecken, bis über die jeweiligen vorderen und hinteren Enden des betreffenden Dachelements (1, 2) hinweg, in einer Richtung im Wesentlichen parallel zur Längsrichtung (130) des Fahrzeugs, wobei jede der Stangen mit einer Mutter (7, 15, 18a, 19) endet, die auf die betreffende Stande geschraubt ist, wobei die Mutter mit einem Verriegelungsansatz (15', 18, 23) verbunden ist, der so translatorisch in die Längsrichtung des Fahrzeugs gesteuert wird, um in einen der vorderen oder hinteren Bereiche der Struktur einzugreifen oder sich aus diesen zu lösen.

15. Dach nach Anspruch 14, **dadurch gekennzeichnet, dass** die Elemente (1, 2, 3) des Dachs in ihrer zweiten Position nebeneinander liegen.

16. Dach nach Anspruch 14 oder 15, **dadurch gekennzeichnet, dass**, um die Dachelemente gemeinsam zu verriegeln, die Mutter (19), die mit einer der Stangen eines der Dachelemente verbunden ist, eine Verriegelungsklaue bildet, die durch die Stange (60) in Bewegung gesetzt wird und so ausgebildet ist, dass sie ein komplementäres Verriegelungselement (34, 36), das an einem anderen Dachelement befestigt ist, einzuhaken, wobei die Verriegelungsklaue dann translatorisch unter der Steuerung der selbst durch das betreffende flexible Element (8) angetriebene Stange beweglich ist, um in das komplementäre Element einzugreifen oder sich davon zu lösen, so dass die Dachelemente in Kontinuität zueinander angeordnet sind.

17. Dach nach einem der Ansprüche 14 bis 16, **dadurch gekennzeichnet, dass**, um das vordere Dachelement (1) mit einer Zone der Struktur unmittelbar an der Windschutzscheibe (111) des Fahrzeugs in der ersten Position der Dachelemente zu verriegeln, so dass diese im Wesentlichen in Kontinuität zueinander ausgerichtet sind, trägt die Schraube (7, 53), die mit einer der Gewindestangen verbunden ist, die mit dem vorderen Dachelement verbunden ist, ein Verankerungselement (24), das unter der Steuerung der Gewindestange schwenkend auf der Mutter angebracht ist, um so in freier Weise mit einem komplementären Verankerungselement (121) zusammenzuwirken, das an der Zone (110) der Struktur unmittelbar an der Windschutzscheibe des Fahrzeugs befestigt ist.

18. Dach nach einem der vorhergehenden Ansprüche, **dadurch gekennzeichnet, dass** in ihrer zweiten Position die Dachelemente (1, 2, 3) im Wesentlichen horizontal übereinander angeordnet sind.

19. Fahrzeug mit einem verschiebbaren Dach nach einem der vorhergehenden Ansprüche.
